Europäisches Patentamt

European Patent Office

Office européen des brevets

(11) Veröffentlichungsnummer: **0 251 179**
**A2**

# (12) EUROPÄISCHE PATENTANMELDUNG

(21) Anmeldenummer: **87109077.5**

(22) Anmeldetag: **24.06.87**

(51) Int. Cl.⁴: **B62D 55/24**

Die Bezeichnung der Erfindung wurde geändert (Richtlinien für die Prüfung im EPA, A-III, 7.3).

(30) Priorität: **26.06.86 DE 8617103 U**

(43) Veröffentlichungstag der Anmeldung:
**07.01.88 Patentblatt 88/01**

(84) Benannte Vertragsstaaten:
**AT CH DE FR IT LI SE**

(71) Anmelder: **Karl Kässbohrer Fahrzeugwerke GmbH**
**Kässbohrerstrasse**
**D-7900 Ulm (Donau)(DE)**

(72) Erfinder: **Haug, W.**
**Winterhalde 5**
**D-7906 Blaustein(DE)**

(74) Vertreter: **Patentanwälte Grünecker,**
**Kinkeldey, Stockmair & Partner**
**Maximilianstrasse 58**
**D-8000 München 22(DE)**

(54) **Raupenkette für Pistenpflegefahrzeuge.**

(57) Die Erfindung betrifft eine Pistenraupenkette für Pistenpflegefahrzeuge mit mehreren, seitlich nebeneinander angeordneten, umlaufenden Raupenbändern und quer dazu angeordneten, mehrere Bänder übergreifenden Raupenstegen. Die Raupenstege sind im Querschnitt etwa tropfenförmig und mit einer ebenen Basisfläche ausgebildet, wobei die Stege mit ihrer Basisfläche auf den Raupenbändern aufliegen und mittels durch die Raupenbänder hindurchgreifenden Schraubbolzen befestigt sind. Um eine Pistenraupenkette der eingangs genannten Art derart zu verbessern, daß deren Verschleiß gemindert und die Lebensdauer erhöht wird, sieht die Erfindung vor, daß die Raupenstege im Bereich der auf den Raupenbändern aufliegenden Basisfläche mit im Querschnitt gesehen wulstförmigen Verbreiterungen ausgebildet sind, die seitlich aus den Raupenstegen hervorragen.

FIG.1

Die vorliegende Erfindung betrifft eine Pistenraupenkette für Pistenpflegefahrzeuge mit mehreren seitlich nebeneinander angeordneten, umlaufenden Raupenbändern und quer dazu angeordneten, mehrere Bänder übergreifenden Raupenstegen, die im Querschnitt etwa tropfenförmig und mit einer ebenen Basisfläche ausgebildet sind, wobei die Stege mit ihrer Basisfläche auf den Raupenbändern aufliegen und mittels durch die Raupenbänder hindurchgreifenden Schraubbolzen befestigt sind.

Derartige Pistenraupenketten sind aus der Praxis mehrfach bekannt. Die Tropfenform der Querstege setzt sich im allgemeinen aus einem kastenförmigen Profil und einer sich von dort aus verjüngenden Schwertlatte zusammen. Das Kastenprofil ist im wesentlichen rechteckig, während die Schwertlatte sich von dem Kastenprofil aus in einer Doppelkonkavform erstreckt. Die Basisfläche, die die Unterseite des Kastenprofiles bildet, ist an ihren Rändern abgerundet, um die aus Gummi mit Textileinlagen bestehenden Raupenbändern nicht zu beschädigen. In den Löchern der Raupenbänder sind Buchsen eingelassen, durch welche die Schraubbolzen hindurchgreifen. Die Schraubbolzen stützen sich zum einen in den Raupenstegen ab und zum anderen an Auflageleisten, die auf der dem Raupensteg gegenüberliegenden Seite des Raupenbandes angeordnet sind.

Nachteilig bei den bekannten Pistenraupenketten ist es, daß die Schraublöcher, in denen die Buchsen eingesetzt sind, nach gewisser Zeit zur Langlochbildung neigen. Außerdem ist in der Nachbarschaft der Raupenstege eine Bläschenbildung an den Raupenbändern zu beobachten, die dadurch entsteht, daß in die Textilschichten der Raupenbänder eindringendes Wasser gefriert und dadurch die einzelnen Gummischichten auseinanderdrückt. Damit verbunden ist der Nachteil, daß die Raupenstege weniger Halt an den Raupenbändern haben, wodurch die Bergsteigefähigkeit der Pistenpflegefahrzeuge vermindert wird. Der geringere Halt der Raupenstege an den Raupenbändern führt aber außerdem zu einer noch höheren Belastung der Raupenbänder, was deren Verschleiß begünstigt.

Es ist daher die Aufgabe der vorliegenden Erfindung, eine Pistenraupenkette der eingangs genannten Art derart zu verbessern, daß deren Verschleiß gemindert und die Lebensdauer erhöht wird.

Diese Aufgabe wird erfindungsgemäß dadurch gelöst, daß die Raupenstege im Bereich der auf den Raupenbändern aufliegenden Basisfläche mit im Querschnitt gesehen wulstförmigen Verbreiterungen ausgebildet sind, die seitlich aus den Raupenstegen hervorragen.

Überraschend an dieser Lösung ist, daß durch die wulstförmigen Verbreiterungen nicht nur die Bandbelastung der Raupenbänder und die Walkarbeit vermindert, sondern auch die Bläschenbildung in der Nachbarschaft der Raupenstege praktisch verhindert wird. Den wulstförmigen Verbreiterungen kommt nämlich neben der Verbreiterung der Basisfläche die weitere Funktion zu, daß sie beim Eintauchen der Querstege in den Schnee diesen von den Schraublöchern der Raupenbänder wegdrücken. Dadurch wird bereits vermieden, daß sich überhaupt Wasser im Bereich der Schraublöcher ansammeln kann. Darüber hinaus bewirken die wulstförmigen Verbreiterungen in überraschender Weise auch, daß beim Befahren von weichem Schnee die oberste Schneeschicht stärker als mit herkömmlichen Pistenraupenketten verdichtet wird. Die wulstförmigen Verbreiterungen benachbarter Raupenstege schieben nämlich die oberste Schneeschicht noch stärker zusammen, so daß sich eine tragfähige oberste Schneeschicht bildet.

Vorteilhaft ist auch, daß die wulstförmigen Verbreiterungen im Bereich zwischen zwei Raupenbändern unterbrochen sind. Dadurch findet bereits im Bereich der Pistenraupenketten ein Ausgleich des zu präparierenden Schnees quer zur Fahrtrichtung des Pistenpflegegerätes statt. Im Bereich der Antriebsräder der Raupenkette werden die wulstförmigen Verbreiterungen durch die die Basisfläche umgreifenden Spurbügel gebildet.

Um auch bei extremen Steigungen einen weichen Kraftangriff der Raupenstege an den Raupenbändern zu erzielen, ist der Raupensteg von den wulstförmigen Verbreiterungen in einer konvexen Krümmung in die Basisfläche übergehend ausgebildet.

Um den Schnee noch besser von den Befestigungsstellen der Raupenstege an den Raupenbändern wegdrücken zu können, ist der Raupensteg in bevorzugter Weise von den wulstförmigen Verbreiterungen sich in einer konkaven Krümmung an die Vorderseite und die Rückseite des Raupensteges anschmiegend ausgebildet.

Entsprechend einer bevorzugten Ausführungsform beträgt der Abstand zwischen einer wulstförmigen Verbreiterung an der Vorderseite einer Raupenkette und der an der Rückseite etwa vier bis fünf Schraubbolzendurchmesser.

Im folgenden wird ein Ausführungsbeispiel der Erfindung anhand einer Zeichnung näher erläutert. Es zeigen:

Figur 1 in schematischer Darstellung eine an dem Fahrwerke eines Pistenpflegefahrzeuges aufgelegte Pistenraupenkette,

Figur 2 einen sich über mehrere Raupenbänder erstreckenden Raupensteg in perspektivischer Ansicht und

Figur 3 eine Detailansicht der Pistenraupenkette im Schnitt durch einen Raupensteg.

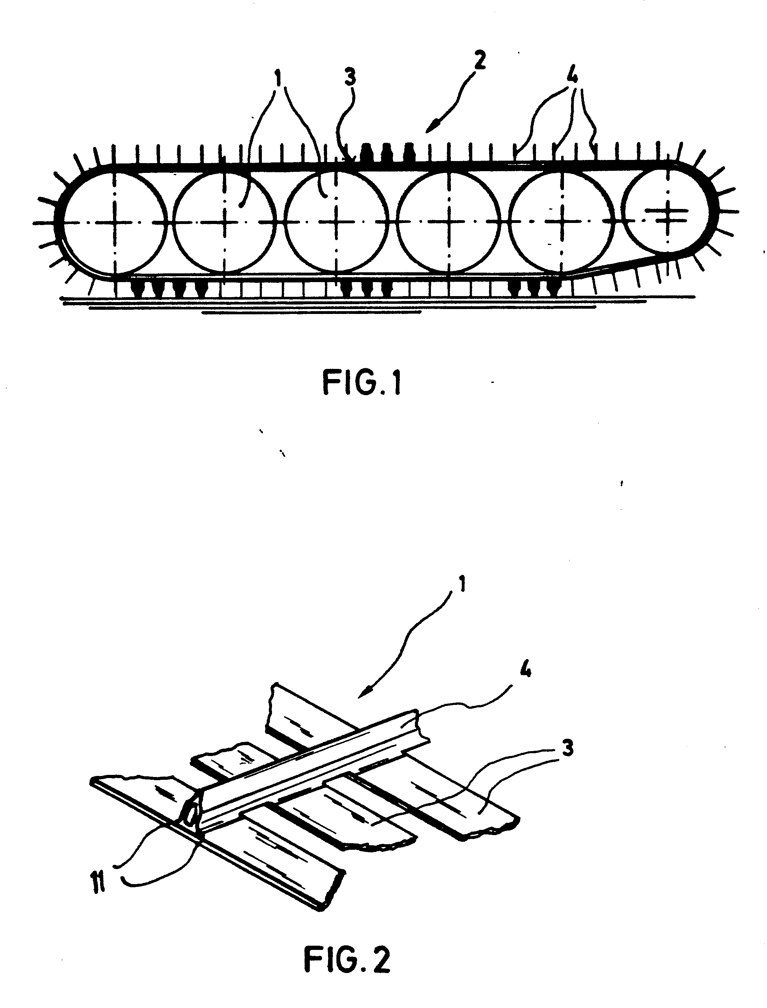

Figur 1 zeigt eine auf Rädern 1 eines nicht dargestellten Pistenpflegefahrzeuges aufgelegte Pistenraupenkette 2.

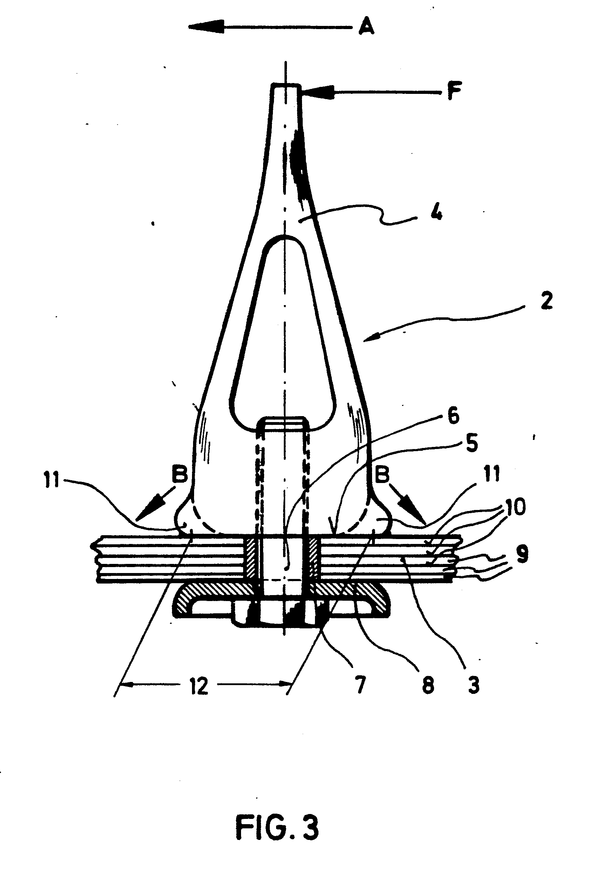

Wie insbesondere auch aus Figur 2 ersichtlich ist, umfaßt die Pistenraupenkette 2 mehrere seitlich nebeneinander angeordnete umlaufende Raupenbänder 3. Die Raupenbänder werden von Raupenstegen 4 übergriffen, welche im Querschnitt etwa tropfenförmig und mit einer ebenen Basisfläche 5 ausgebildet sind (vgl. Figur 3).

Die Figur 3 zeigt auch, daß die Raupenstege 4 mit ihren Basisflächen 5 auf den Raupenbändern aufliegen und mittels durch die Raupenbänder 3 hindurchgreifende Schraubbolzen 6 an den Raupenbändern 3 befestigt sind.

Im einzelnen weisen die Befestigungselemente auch noch in den Schraublöchern der Raupenbänder 3 eingesetzte Buchsen 7 und auf der dem jeweiligen Raupensteg 4 gegenüberliegenden Seite der Raupenbänder 3 eine Unterlegleiste 8 auf.

Bei dem hier dargestellten Ausführungsbeispiel bestehen sowohl die Raupenstege 4, die Buchsen 7 und die Unterlegleisten 8 aus Aluminium. Die Schraubbolzen 6 sind direkt in ein Gewinde der Raupenstege 4 eingeschraubt.

Die Raupenbänder 3 bestehen aus mehreren Gummischichten 9, in welche Textilschichten 10 zur Verstärkung eingelegt sind.

Im Bereich der Basisfläche 5 weisen die Raupenstege 4 im Querschnitt gesehen wulstförmige Verbreiterungen 11 auf. Die Verbreiterungen 11, welche in Fahrtrichtung A gesehen einmal vor und einmal hinter einem Raupensteg 4 angeordnet sind, ragen jeweils seitlich aus den Raupenstegen 4 hervor.

Wie besser aus der Figur 2 ersichtlich ist, sind die wulstförmigen Verbreiterungen 11 im Bereich zwischen zwei Raupenbändern 3 unterbrochen sind (vgl. Figur 2).

Wie aus Figur 3 ersichtlich ist, gehen die wulstförmigen Verbreiterungen 11 in einer konvexen Krümmung in die Basisfläche 5 des Raupenstege 4 über.

Es ist auch gut zu erkennen, daß sich die wulstförmigen Verbreiterungen 11 jeweils in einer konkaven Krümmung an die Vorderseite und die Rückseite des Raupensteges 4 anschmiegen.

Der Abstand 12 zwischen einer wulstförmigen Verbreiterung 11 an der Vorderseite eines Raupensteges und der an der Rückseite beträgt etwa vier bis fünf Schraubbolzendurchmesser. Im Bereich zwischen zwei wulstförmigen Verbreiterungen 11 ist die Basisfläche parallel zu dem jeweiligen Raupenband 3 ausgebildet und liegt fest an diesem an.

Im folgenden wird die Wirkungsweise der erfindungsgemäßen Pistenraupenkette 2 erläutert.

Wie in der Figur 3 schematisch dargestellt ist, wirkt im Fahrbetrieb auf die Raupenstege 4 eine Kraft F. Diese Kraft F überträgt sich über den Raupensteg 4 und dessen Basisfläche 5 auf das jeweilige Raupenband 3. Dadurch wird eine Seite der Basisfläche 5 entlastet, während die andere Seite der Basisfläche 5 belastet wird.

Unter ungünstigen Fahrbedingungen, insbesondere bei extremen Steigfahrten und bereits stark gebrauchten Pistenraupenketten 2 kann es vorkommen, daß die Basisfläche 5 auf der entlasteten Seite des Raupensteges 4 geringfügig von dem Raupenband 3 abhebt. Bei herkömmlichen Raupenketten konnte dann Schnee zwischen die Basisfläche 5 und das jeweilige Raupenband 3 eindringen.

Bei dem in Figur 3 dargestellten Raupensteg 4 erfährt der Schnee beim Eintauchen des Raupensteges 4 in die Schneedecke eine Kraftkomponente in Richtung der Pfeile B, die den Schnee zwischen zwei benachbarten Raupenstegen verdichtet, den Schnee insbesondere aber von einem etwaigen Spalt zwischen der Raupenkette 3 und der Basisfläche 5 wegdrückt.

Dieses Wegdrücken des Schnees in Richtung der Pfeile B wird besonders durch den konkaven Übergang zwischen den wulstförmigen Verbreiterungen 11 und der Vorder- und der Rückseite der Raupenstege 4 begünstigt.

Den wulstförmigen Verbreiterungen 11 kommt damit die Doppelfunktion zu, zum einen den Schnee von der gefährdeten Befestigungsstelle der Raupenstege 4 wegzudrücken, und durch Verbreiterung der Basisfläche 5 die auf die Raupenbänder 3 ausgeübte Kraft zu verringern. Die Oberfläche der ebenen Basisfläche 5 kann profiliert werden, um die Verbindung mit den Raupenbändern zu verbessern.

## Ansprüche

1. Pistenraupenkette für Pistenpflegefahrzeuge mit mehreren, seitlich nebeneinander angeordneten, umlaufenden Raupenbändern und quer dazu angeordneten, mehrere Bänder übergreifenden Raupenstegen, die im Querschnitt etwa tropfenförmig und mit einer ebenen Basisfläche ausgebildet sind, wobei die Stege mit ihrer Basisfläche auf den Raupenbändern aufliegen und mittels durch die Raupenbänder hindurchgreifenden Schraubbolzen befestigt sind, dadurch **gekennzeichnet** , daß die Raupenstege (4) im Bereich der auf den Raupenbändern (3) aufliegenden Basisfläche (5) mit im Querschnitt gesehen wulstförmigen Verbreiterungen (11) ausgebildet sind, die seitlich aus den Raupenstegen (4) hervorragen.

2. Pistenraupenkette nach Anspruch 1, dadurch **gekennzeichnet**, daß die wulstförmigen Verbreiterungen (11) im Bereich zwischen zwei Raupenbändern (3) unterbrochen sind.

3. Pistenraupenkette nach Anspruch 1 oder 2, dadurch **gekennzeichnet**, daß der Raupensteg (4) von den wulstförmigen Verbreiterungen in einer konvexen Krümmung in die Basisfläche (5) übergehend ausgebildet ist.

4. Pistenraupenkette nach mindestens einem der Ansprüche 1 bis 3, dadurch **gekennzeichnet**, daß der Raupensteg (4) von den wulstförmigen Verbreiterungen (11) sich in einer konkaven Krümmung an die Vorderseite und die Rückseite des Raupensteges (4) anschmiegend ausgebildet ist.

5. Pistenraupenkette nach mindestens einem der Ansprüche 1 bis 4, dadurch **gekennzeichnet**, daß der Abstand zwischen einer wulstförmigen Verbreiterung (11) an der Vorderseite eines Raupensteges (4) und der an der Rückseite etwa vier bis fünf Schraubbolzendurchmesser beträgt.

FIG.1

FIG.2

FIG. 3